(19) Europäisches Patentamt
European Patent Office
Office européen des brevets

(11) **EP 4 258 128 B1**

(12) **EUROPEAN PATENT SPECIFICATION**

(45) Date of publication and mention of the grant of the patent:
**09.09.2026 Bulletin 2026/37**

(21) Application number: **21913631.4**

(22) Date of filing: **24.11.2021**

(51) International Patent Classification (IPC):
***G06F 16/23*** *(2019.01)* ***G01C 21/00*** *(2006.01)*
***G01C 21/36*** *(2006.01)*

(52) Cooperative Patent Classification (CPC):
**G06F 16/29; G01C 21/3691; G01C 21/3811; G01C 21/3878; G06F 16/23**

(86) International application number:
**PCT/CN2021/132865**

(87) International publication number:
**WO 2022/142889 (07.07.2022 Gazette 2022/27)**

(54) **HIGH-PRECISION MAP UPDATING METHOD AND APPARATUS**

VERFAHREN UND VORRICHTUNG ZUR AKTUALISIERUNG EINER HOCHPRÄZISEN KARTE

PROCÉDÉ ET APPAREIL DE MISE À JOUR DE CARTE DE HAUTE PRÉCISION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.12.2020 CN 202011638322**

(43) Date of publication of application:
**11.10.2023 Bulletin 2023/41**

(73) Proprietor: **Yinwang Intelligent Technologies Co., Ltd.**
**Shenzhen, Guangdong 518129 (CN)**

(72) Inventors:
- **FEI, Wenkai**
  **Shenzhen, Guangdong 518129 (CN)**
- **LIU, Jianqin**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(56) References cited:

| | |
|---|---|
| **WO-A1-2020/045318** | **CN-A- 108 344 414** |
| **CN-A- 110 704 147** | **CN-A- 111 243 059** |
| **CN-A- 111 522 898** | **US-A1- 2004 267 781** |
| **US-A1- 2020 158 530** | |

- **EITER THOMAS ET AL: "Towards a Semantically Enriched Local Dynamic Map", INTERNATIONAL JOURNAL OF INTELLIGENT TRANSPORTATION SYSTEMS RESEARCH, SPRINGER US, BOSTON, vol. 17, no. 1, 26 March 2018 (2018-03-26), pages 32 - 48, XP036665619, ISSN: 1348-8503, [retrieved on 20180326], DOI: 10.1007/S13177-018-0154-X**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 258 128 B1

## Description

## TECHNICAL FIELD

This disclosure relates to the field of intelligent connected vehicle technologies, and in particular, the invention relates to a high-definition map update method, apparatus, computer-readable storage medium and map.

## BACKGROUND

As one of key capabilities to implement autonomous driving, a high-definition map will be an effective supplement to an existing sensor for autonomous driving, and provides a more reliable sensing capability for a vehicle. Compared with a conventional navigation map, the high-definition map serving autonomous driving has higher requirements in all aspects, and can cooperate with a sensor and an algorithm to support decision-making.

In an autonomous driving process, an external environment may dynamically change, affecting traveling of the vehicle. Therefore, in addition to a static layer, the high-definition map has an increasing demand for more dynamic information, to meet a development requirement of the transportation field. The dynamic information includes a large amount of information, for example, real-time traffic flow information, road occupation information, traffic control information, a signal light status, and collaborative driving information. If the information can be accurately expressed in the high-definition map, timely road information, driving suggestions, risk warning, and the like can be provided for the vehicle and the like, to efficiently improve safety of autonomous driving. However, there is no uniform industry standard and implementation product for expression of the dynamic information in the high-definition map.

In conclusion, how to provide a feasible and effective dynamic event expression method for the high-definition map to better update the high-definition map is a technical problem that needs to be resolved by persons skilled in the art. WO 2020/045318 A1 relates to a system for generating and updating high-definition maps for autonomous vehicles.

## SUMMARY

The object of the present invention is to provide a high-definition map update method, apparatus, computer-readable storage medium and map, to improve event expression of a high-definition map, and improve accuracy of the event expression of the high-definition map, so as to better update the high-definition map. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to a first aspect according to the invention, this application provides a high-definition map updating method, according to claim 1.

In this application, the expression manner of the dynamic event in the high-definition map is evaluated from a plurality of dimensions, so that an expression manner of each dynamic event can be accurately determined, and automatic processing is easily implemented. Compared with the conventional technology, this application provides a feasible and effective high-definition map update method. Thus, event expression of the high-definition map is improved, and accuracy and automation of the event expression of the high-definition map are improved to better and efficiently update the high-definition map.

In the invention, the n dimensions include at least two of the following dimensions:
an update frequency of a dynamic event status, an occurrence probability of an event, a degree of impact of an event on a topology of the high-definition map, a degree of an association change of an event, reusability of geometric expression of an event for the static layer, or a degree of independence of an event from the static layer.

For example, this application provides several considered dimensions used to evaluate the expression manner of the dynamic event in the high-definition map, and the expression manner of the dynamic event can be accurately and properly determined from at least one of these dimensions.

In a possible implementation, when the dynamic event includes a plurality of dynamic events,
that a map update apparatus obtains n-dimensional feature information of a dynamic event in n dimensions includes:

the map update apparatus obtains n-dimensional feature information of the plurality of dynamic events in the n dimensions; and

that the map update apparatus determines, based on the n-dimensional feature information, an expression manner of

the dynamic event in the high-definition map includes:
the map update apparatus determines, based on the n-dimensional feature information of the plurality of dynamic events in the n dimensions by using a clustering algorithm, expression manners of the plurality of dynamic events in the high-definition map.

In this application, the clustering algorithm may be used to classify various dynamic events based on the foregoing described considered dimensions, so that an expression manner of the dynamic event of each type obtained through classification can be determined. Calculation by using the clustering algorithm can improve calculation efficiency, and can also improve accuracy of dynamic event classification. Thus, accuracy of the expression manner of the dynamic event is improved.

In a possible implementation, the determining, by using a clustering algorithm, expression manners of the plurality of dynamic events in the high-definition map includes:

the map update apparatus classifies, by using the clustering algorithm, the plurality of dynamic events to obtain a first-type dynamic event and a second-type dynamic event; and
in a case of determining, through analysis based on n-dimensional feature information of the first-type dynamic event and n-dimensional feature information of the second-type dynamic event, that a degree of association between the first-type dynamic event and the static layer in the high-definition map is greater than a degree of association between the second-type dynamic event and the static layer in the high-definition map,
the map update apparatus classifies the first-type dynamic event as an event expressed in the extended attribute expression manner, and classifies the second-type dynamic event as an event expressed in the dynamic layer expression manner.

In this application, after the dynamic events are classified into two types, an expression manner of the dynamic event of each type may be determined based on a value of the degree of association between the two types of events and the static layer in the high-definition map, so that accuracy of the expression manner of the dynamic event can be improved. It should be noted that the degree of association between the dynamic event and the static layer in the high-definition map indicates impact of expression of the dynamic event in the high-definition map on the static layer. A greater degree of association indicates more impact, and a smaller degree of association indicates less impact. That is, the impact is in positive coloration with the degree of association.

In a possible implementation, when the dynamic event includes a first dynamic event,
that the map update apparatus determines, based on the n-dimensional feature information, an expression manner of the dynamic event in the high-definition map includes:

the map update apparatus determines a determining result of an expression manner of the first dynamic event in each single dimension based on feature information in the single dimension in the n-dimensional feature information, to obtain n determining results, where the determining result includes that the expression manner of the first dynamic event is at least one of the extended attribute expression manner or the dynamic layer expression manner; and
the map update apparatus determines that the expression manner of the dynamic event in the high-definition map is an expression manner that accounts for a largest proportion in the n determining results.

In this application, the expression manner of the dynamic event may be determined based on the foregoing n dimensions by using a voting mechanism. This is also an implementation in which the expression manner of the dynamic event can be accurately determined.

In a possible implementation, after the map update apparatus determines, based on the n-dimensional feature information, the expression manner of the dynamic event in the high-definition map, the method further includes:
the map update apparatus stores the dynamic event and the expression manner of the dynamic event in a memory in an associated manner.

In this application, the determined expression manner and the corresponding dynamic event can be stored in the associated manner for subsequent query, so that repeated calculation during each use can be avoided, and computing resources can be saved.

In a possible implementation, that the map update apparatus expresses the dynamic event in the high-definition map based on the determined expression manner of the dynamic event includes:
the map update apparatus obtains latest information of the dynamic event, and obtains, from the memory, an expression manner of the dynamic event;

the map update apparatus determines that the expression manner of the dynamic event is the extended attribute expression manner; and

the map update apparatus creates an extended attribute table based on the latest information of the dynamic event, and associates the created extended attribute table with the static layer in the high-definition map; or
the map update apparatus modifies an existing extended attribute table based on the latest information of the dynamic event.

In this application, after it is determined that the dynamic event is expressed in the extended attribute expression manner, latest attribute information of the dynamic event is associated with the static layer, so that a latest status of the dynamic event can be expressed in the high-definition map.
In a possible implementation, that the map update apparatus expresses the dynamic event in the high-definition map based on the determined expression manner of the dynamic event includes:
the map update apparatus obtains latest information of the dynamic event, and obtains, from the memory, an expression manner of the dynamic event;

the map update apparatus determines that the expression manner of the dynamic event is the dynamic layer expression manner; and
the map update apparatus creates a dynamic layer based on the latest information of the dynamic event, or modifies an existing dynamic layer based on the latest information of the dynamic event.

In this application, after it is determined that the dynamic event is expressed in the dynamic layer expression manner, latest attribute information of the dynamic event is added to the corresponding dynamic layer, so that a latest status of the dynamic event can be expressed in the high-definition map.
According to a second aspect not claimed, this application provides a dynamic event expression apparatus, where the apparatus includes:

an obtaining unit, configured to obtain n-dimensional feature information of a dynamic event in n dimensions, where the n dimensions are n factors that affect expression of the dynamic event in a high-definition map, the dynamic event is an event that causes dynamic information in the high-definition map to change, and n is an integer greater than 1;
a determining unit configured to determine, based on the n-dimensional feature information, an expression manner of the dynamic event in the high-definition map, where the expression manner includes at least one of an extended attribute expression manner or a dynamic layer expression manner, the extended attribute expression manner is an expression manner of associating the dynamic event with a static layer in the high-definition map and using the dynamic event as an extended attribute of a static layer element, and the dynamic layer expression manner is a manner of adding the dynamic event to a dynamic layer in the high-definition map for expression; and
an expression unit, configured to express the dynamic event in the high-definition map based on the determined expression manner of the dynamic event.

It should be noted that the dynamic event expression apparatus provided in this application may be a server or a roadside unit (for example, it may be an RSU, and the RSU is short for a road side unit) or a vehicle-end device, where the vehicle-end device may include a vehicle, a processing device or unit in the vehicle, or the like.
The n dimensions include at least one of the following dimensions:
an update frequency of a dynamic event status, an occurrence probability of an event, a degree of impact of an event on a topology of the high-definition map, a degree of an association change of an event, reusability of geometric expression of an event for the static layer, or a degree of independence of an event from the static layer.
In a possible implementation, when the dynamic event includes a plurality of dynamic events,
the obtaining unit is specifically configured to:

obtain n-dimensional feature information of the plurality of dynamic events in the n dimensions; and
the determining unit is specifically configured to:
determine, based on the n-dimensional feature information of the plurality of dynamic events in the n dimensions by using a clustering algorithm, expression manners of the plurality of dynamic events in the high-definition map.

In a possible implementation, the determining unit is specifically configured to:

classify, by using the clustering algorithm, the plurality of dynamic events to obtain a first-type dynamic event and a second-type dynamic event; and
in a case of determining, through analysis based on n-dimensional feature information of the first-type dynamic event and n-dimensional feature information of the second-type dynamic event, that a degree of association between the first-type dynamic event and the static layer in the high-definition map is greater than a degree of association between

the second-type dynamic event and the static layer in the high-definition map,
classify the first-type dynamic event as an event expressed in the extended attribute expression manner, and classify the second-type dynamic event as an event expressed in the dynamic layer expression manner.

In a possible implementation, when the dynamic event includes a first dynamic event, the determining unit is specifically configured to:

determine a determining result of an expression manner of the first dynamic event in each single dimension based on feature information in the single dimension in the n-dimensional feature information, to obtain n determining results, where the determining result includes that the expression manner of the first dynamic event is at least one of the extended attribute expression manner or the dynamic layer expression manner; and
determine that the expression manner of the dynamic event in the high-definition map is an expression manner that accounts for a largest proportion in the n determining results.

In a possible implementation, the apparatus further includes a storage unit, configured to: after the determining unit determines, based on the feature information, the expression manner of the dynamic event in the high-definition map, store the dynamic event and the expression manner of the dynamic event in a memory in an associated manner.
In a possible implementation, the expression unit is specifically configured to:

obtain latest information of the dynamic event, and obtain, from the memory, an expression manner of the dynamic event;
determine that the expression manner of the dynamic event is the extended attribute expression manner; and
create an extended attribute table based on the latest information of the dynamic event, and associate the created extended attribute table with the static layer in the high-definition map; or
modify an extended attribute table of the dynamic event based on the latest information of the dynamic event.

In a possible implementation, the expression unit is specifically configured to:

obtain latest information of the dynamic event, and obtain, from the memory, an expression manner of the dynamic event;
determine that the expression manner of the dynamic event is the dynamic layer expression manner; and
create a dynamic layer based on the latest information of the dynamic event; or
modify, based on the latest information of the dynamic event, a dynamic layer to which the dynamic event belongs.

According to a third aspect according to the invention, this application provides a dynamic event expression apparatus. The apparatus may include a processor, configured to implement the high-definition map update method described in the first aspect. The apparatus may further include a memory. The memory is coupled to the processor. When executing a computer program stored in the memory, the processor can implement the high-definition map update method described in any one of the first aspect or the possible implementations of the first aspect. The apparatus may further include a communication port. The communication port is used by the apparatus to communicate with another apparatus. For example, the communication port may be a transceiver, a circuit, a bus, a module, or another type of communication port. It should be noted that the dynamic event expression apparatus provided in this application may be a server or a roadside unit (for example, it may be an RSU, and the RSU is short for a road side unit) or a vehicle-end device, where the vehicle-end device may include a vehicle, a processing device or unit in the vehicle, or the like.
In a possible implementation, the apparatus may include:

the memory, configured to store the computer program; and
the processor, configured to: obtain n-dimensional feature information of a dynamic event in n dimensions, where the n dimensions are n factors that affect expression of the dynamic event in a high-definition map, the dynamic event is an event that causes dynamic information in the high-definition map to change, and n is an integer greater than 1; determine, based on the n-dimensional feature information, an expression manner of the dynamic event in the high-definition map, where the expression manner includes at least one of an extended attribute expression manner or a dynamic layer expression manner, the extended attribute expression manner is an expression manner of associating the dynamic event with a static layer in the high-definition map and using the dynamic event as an extended attribute of a static layer element, and the dynamic layer expression manner is a manner of adding the dynamic event to a dynamic layer in the high-definition map for expression; and express the dynamic event in the high-definition map based on the determined expression manner of the dynamic event.

It should be noted that the computer program in the memory in this application may be pre-stored, or may be downloaded from the Internet and stored when the apparatus is used. A source of the computer program in the memory is not specifically limited in this application. Coupling in embodiments of this application is indirect coupling or a connection between apparatuses, units, or modules for information exchange between the apparatuses, the units, or the modules, and may be in electrical, mechanical, or other forms.

According to a fourth aspect according to the invention, this application provides a computer-readable storage medium. The computer-readable storage medium stores a computer program, and when the computer program is executed by a processor, the method according to any one of implementations of the first aspect is implemented.

According to a fifth aspect not claimed, this application provides a computer program product. When the computer program product is processed and executed, the method according to any one of implementations of the first aspect is performed.

According to a sixth aspect according to the invention, this application further provides a high-definition map. The high-definition map includes at least one of a static layer that carries dynamic information or a dynamic layer that carries dynamic information, and an expression manner of the dynamic information in the high-definition map is determined by using the method according to any one of implementations of the first aspect.

The solutions provided in the second aspect to the sixth aspect are used to implement or cooperated to implement the method provided in the first aspect, and therefore, can achieve beneficial effects the same as or corresponding to those in the first aspect. Details are not described herein again.

In conclusion, in this application, the expression manner of the dynamic event in the high-definition map is evaluated from a plurality of dimensions, so that an expression manner of each dynamic event can be accurately determined, and automatic processing is easily implemented. Compared with the conventional technology, this application provides a feasible and efficient high-definition map update method. Thus, event expression of the high-definition map can be improved, and accuracy and automation of the event expression of the high-definition map are improved.

## BRIEF DESCRIPTION OF DRAWINGS

The following briefly describes the accompanying drawings for embodiments of the embodiments of this application.

FIG. 1 is a schematic diagram of a system architecture used in a high-definition map update method according to an embodiment of this application;
FIG. 2 is a schematic flowchart of a high-definition map update method according to an embodiment of this application;
FIG. 3 is a schematic diagram of expression manners of various dynamic events according to this application;
FIG. 4 is a schematic diagram of associating an extended attribute table with a static layer according to this application;
FIG. 5 is a schematic diagram of associating a dynamic layer with a static layer according to this application;
FIG. 6 is a schematic diagram of a logical structure of a device according to an embodiment of this application; and
FIG. 7 is a schematic diagram of a hardware structure of a device according to an embodiment of this application.

In the following description, features which in the above summary of the invention have been marked as "not claimed" are also hereinafter, when they are described and explained with reference to the drawings, to be understood as "not claimed" or "not part of the invention".

## DESCRIPTION OF EMBODIMENTS

The following describes the technical solutions in embodiments of this application with reference to the accompanying drawings.

To better understand a high-definition map update method provided in embodiments of the present application, the following first describes an example of a scenario to which this embodiment of the present application is applicable.

The high-definition map update method provided in this application is applied to a high-definition map. With development of autonomous driving, intelligent assisted driving, transportation networking, and the like, the high-definition map gradually becomes a tool to better serve these fields. For example, in the field of autonomous driving, the high-definition map describes a road more accurately, clearly, and comprehensively, and can reflect various dynamic events on the road in real time. Therefore, a lot of space can be provided for a vehicle in predetermining, and traveling can be preplanned, to ensure traveling stability and economy performance. In addition, the high-definition map can help the vehicle reduce a calculation amount. When the vehicle needs to pass through an intersection, the vehicle needs to sense a status of a signal lamp ahead in advance. In this case, the high-definition map can help the vehicle locate a specific area in which the signal lamp is located, to effectively reduce the calculation amount of full-range scanning and recognition.

The high-definition map update method provided in this application may be further applied to another field, and is

not limited to the field of high-definition maps described above.

To enable the high-definition map to implement the functions described above, various dynamic events that affect vehicle traveling need to be expressed in the high-definition map, so that the vehicle can sense these dynamic events. However, there is no uniform industry standard and implementation product for expression of the dynamic events in the high-definition map. Therefore, this application provides a feasible and effective high-definition map update method, to better express the dynamic event that affects traveling in the high-definition map, so as to better serve a field such as driving.

Optionally, the high-definition map update method provided in this application may be implemented in a server, a roadside unit, or a vehicle-end device (for example, a vehicle or a processing device or unit in a vehicle), and a device for implementing the high-definition map update method provided in this application is referred to as a map update apparatus.

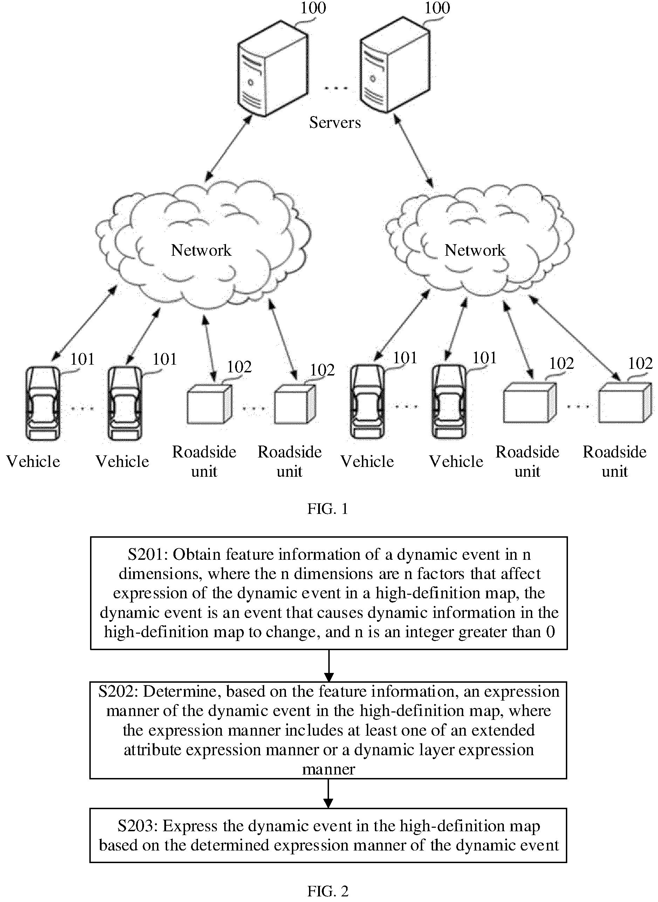

For ease of understanding, refer to FIG. 1. FIG. 1 is an example of a schematic diagram of a system architecture used in a high-definition map update method according to an embodiment of this application. The system architecture may include a server 100, a vehicle 101, a roadside unit 102, and the like. The server 100 may include one or more servers, and the plurality of servers may form a server cluster. The server 100 may implement mutual communication with the vehicle 101 and the roadside unit 102 by using a network. In addition, the roadside unit 102 may also implement interactive communication with the vehicle 101.

The server 100 may interact with another device to obtain information used by a high-definition map. For example, the server 100 may interact with a device such as a server of a transportation bureau to obtain traffic information. For another example, the server 100 may interact with a device such as a server of a meteorological bureau to obtain weather information. The vehicle 101 may be an autonomous vehicle, a semi-autonomous vehicle, or may be a common vehicle, or the like.

If the high-definition map update method provided in this application is implemented in the server 100, the vehicle 101 may interact with the server 100 to obtain a high-definition map in a latest status. Alternatively, the server 100 may send a high-definition map in a latest status to the roadside unit 102, and the vehicle 101 interacts with the roadside unit 102 to obtain the high-definition map.

If the high-definition map update method provided in this application is implemented in the roadside unit 102, the roadside unit 102 may obtain latest information about various dynamic events from the server 100, and update the high-definition map based on the latest information. The vehicle 101 may then interact with the roadside unit 102 to obtain a high-definition map in a latest status.

If the high-definition map update method provided in this application is implemented in the vehicle 101, the vehicle 101 may obtain latest information about various dynamic events from the server 100, and update the high-definition map for use based on the latest information.

It should be noted that the system mechanism shown in FIG. 1 is merely an example. As long as a system architecture that can be applied to the high-definition map update method provided in this application falls within the protection scope of this application, a specific used system architecture is not limited in this application.

Based on the foregoing description, the following describes a feasible and effective high-definition map update method provided in this application. Refer to FIG. 2. The method is performed by the foregoing map update apparatus, and may include but is not limited to the following steps.

S201: Obtain feature information of a dynamic event in n dimensions, where the n dimensions are n factors that affect expression of the dynamic event in a high-definition map, the dynamic event is an event that causes dynamic information in the high-definition map to change, and n is an integer greater than 1.

In a specific embodiment, the dynamic event includes some or all of the following events:

A weather status: The weather status may include a dynamic event such as a temperature status, an atmospheric pressure status, a humidity condition, a sunny day, a cloudy day, a windy condition, a hazy condition, a rainy condition, a lightning condition, a snowy condition, a frosty condition, a thunder condition, or a hail condition.

A road coverage condition or a road environment: The road coverage condition or the road environment may include a dynamic event such as water accumulation, snow accumulation, ice or breakage of road coverage.

A road adhesion coefficient condition: The road adhesion coefficient condition refers to adhesion between a road and a vehicle tire, where the greater the adhesion, the less likely a vehicle is to skid.

A road visibility condition: The road visibility condition may refer to a visible distance caused by haze or light.

A temporary point of interest (point of interest, POI) condition: The temporary point of interest condition may include a dynamic event such as a non-fixed point of interest, a temporary available parking space, a temporary available charging pile, or a temporary public service point.

A recommendation information condition: The recommendation information condition may include a dynamic event such as user interest point recommendation or itinerary suggestion recommendation.

A road traffic condition: The road traffic condition may include a dynamic event such as a traffic accident, traffic control, road construction, or an accident-prone road section.

A traffic flow condition: The traffic flow condition may include an amount of traffic flow on each road.

A traffic light status: The traffic light status may include a dynamic event such as a traffic light phase status, semantic information, timing data, or a working status.

A vehicle obstacle: The vehicle obstacle may include a type of a vehicle causing the obstacle, motion information, vehicle lamp and door information, control information, driving behavior prediction information, or the like.

Another obstacle: The another obstacle may include all obstacles except the vehicle obstacle.

A risk warning condition: The risk warning condition may include information such as a risk type (a collision risk in each direction, a landslide risk, and the like), a risk level, or a preventative suggestion.

A collaborative driving condition: The collaborative driving condition may refer to vehicle collaborative guide information, including lane change collaboration, steering collaboration, special vehicle avoidance, parking and entry collaboration, and the like.

A route planning condition: The route planning condition may refer to a planned route of a traveling route made based on an existing road condition, and the like.

A road network topology change condition: The road network topology change condition may refer to a temporary change of a drivable route caused by a road traffic event, such as a change in geometric expression or attribute of a road route and a lane line.

The foregoing example describes some dynamic events applied to the high-definition map, and in actual application, an expression granularity of the dynamic event may be finer. For example, when the dynamic event, namely, the weather status, is actually expressed in the high-definition map, it can be expressed as a specific event such as raining, snowing or a sunny day. These dynamic events can be updated and expressed in the high-definition map in real time. This can provide various dynamic conditions in the road for an object using the high-definition map such as a vehicle in real time, and provide powerful reference for further route planning and behavior prediction. It should be noted that a dynamic event actually used for the high-definition map is not limited to the foregoing events. A specific dynamic event and a specific quantity are not limited in this application.

There are various types of dynamic events. When the plurality of types of dynamic events are expressed in the high-definition map, a proper expression method may be selected to express a corresponding dynamic event. In this application, an expression manner of a dynamic event in the high-definition map includes an extended attribute expression manner and a dynamic layer expression manner.

The foregoing extended attribute expression manner is an expression manner of associating a dynamic event with a static layer in the high-definition map and using the dynamic event as an extended attribute of a static map element. The extended attribute may be a coverage of an existing attribute of the static map element to express an attribute change of the static map element, or may be an extended addition of an attribute of the static map element. The static map element may include a lane, a crosswalk, a billboard along a road, an isolation belt, a speed limit sign, a traffic light or a roadside phone booth, and the like.

The foregoing dynamic layer expression manner is a manner of adding a dynamic event to a dynamic layer associated with the static layer for expression. Therefore, it can be seen that the dynamic event expressed in the extended attribute expression manner has a great degree of association with the static layer, while the dynamic event expressed in the dynamic layer expression manner has a small degree of association with the static layer.

In this case, how to select a proper expression manner for a dynamic event is a problem to be resolved. In this application, a specific expression manner of a dynamic event is evaluated from some considered dimensions. The foregoing n dimensions include at least two of the following dimensions:

An update frequency of an event status: This dimension may be used to evaluate a change frequency of a dynamic event. For example, for the dynamic event, namely, the vehicle obstacle, the dynamic event frequently changes in a vehicle traveling process, and therefore the change frequency is high. However, for the dynamic event, namely, the road adhesion coefficient, the change frequency is low.

An occurrence probability of an event: This dimension can be used to evaluate whether a dynamic event occurs frequently or occasionally.

A degree of impact of an event on a topology of the high-definition map: This dimension can be used to evaluate a degree of impact of a dynamic event on a topology of a static layer of the high-definition map. The topology of the static layer is a road network structure within coverage of the high-definition map, and includes an association relationship between upper and lower nodes of a passable area, and the like. For example, information about the traffic light status is only a status or an attribute of a traffic light element in the static layer, and a change of a traffic light status does not affect the topology structure of the map. However, dynamic events such as the road construction or traffic accident occupy lanes and affect the passable area and lane, thereby changing a passable topology and greatly affecting a map topology.

A degree of an association change of an event: This dimension can be used to evaluate a degree of impact of an occurrence or a status change of a dynamic event on an occurrence or a dynamic change of another dynamic event. For example, a change in a value of the road adhesion coefficient may be considered as a status change of a road attribute, and does not greatly affect an occurrence or a status change of another dynamic event. However, if the dynamic event of raining occurs, the value of road adhesion coefficient may be affected, and the road adhesion coefficient may be smaller

after raining.

Reusability of geometric expression of an event to the static layer: This dimension may be used to evaluate whether geometric expression of a dynamic event is the same as or corresponding to geometric expression of a corresponding map element in the static layer. In addition, this dimension can be used to evaluate whether a dynamic event can directly use the geometric expression of the map element at a corresponding location in the static layer without being expressed separately. For example, the dynamic event, namely, the traffic light status information can directly reuse a traffic light in the static layer without using another geometric entity in the map. For another example, if the dynamic event, namely, the vehicle obstacle does not exist in the static layer, the vehicle obstacle needs to be expressed in the map in another manner.

The geometric expression of the dynamic event refers to a geometric form of each dynamic event in the high-definition map. For example, a dynamic event in a weather status such as raining, snowing, a sunny day, and a cloudy day can be expressed by an area-level planar set in the high-definition map. For another example, the road construction and traffic accident may generally be expressed by an irregular graphic formed by vertices and lines of a polygon at a road level or lane level.

The area-level planar geometric expression may be a polygonal surface, an annular surface, or the like. A difference between the area-level geometric expression and the road-level geometric expression lies in that an area-level event with a large impact range may directly express a geometric location in a map tile, and a road-level event needs to express a geometric location on a road. Relative coordinates of a location point of the road geometric expression are determined relative to a feature reference point on the road.

A degree of independence of an event from the static layer: this dimension may be used to evaluate a degree of dependency of expression of a dynamic event on the static layer. For example, the dynamic event, namely, the weather status is generally a large-scale event that can be geometrically expressed, and does not depend on the road network structure of the static map. Therefore, the dynamic event, namely, the weather status is less dependent on the static layer and the layer is more independent. For another example, the dynamic event such as the road construction needs to be expressed in a specific location of lane construction, depends on the road network structure of the static layer, and is relatively dependent on the static layer, so independence of this event is low.

The foregoing example describes a plurality of considered dimensions that may be used for dynamic event expression. It should be noted that actually considered dimensions are not limited to the foregoing description, and a specific considered dimension is not limited in this application.

After the n dimensions used to evaluate the specific expression manner of the dynamic event are determined, feature information of the dynamic event in the n dimensions may be obtained, where the feature information represents a feature of the dynamic event in each dimension. For ease of understanding, an example is used below for description.

It is assumed that the foregoing n dimensions are three dimensions: the update frequency of an event status, the occurrence probability of an event, and the degree of independence of an event from the static layer. It is assumed that the dynamic event includes several events: the weather status, the traffic accident, the accident-prone road section, the vehicle obstacle, and the traffic light status. For feature information of the several dynamic events in the three dimensions, refer to Table 1.

**Table 1**

| Event / Dimension | Weather status | Traffic accident | Accident-prone road section | Vehicle obstacle | Traffic light status |
|---|---|---|---|---|---|
| Update frequency of an event status | 0.1 | 0.5 | 0.01 | 1 | 0.9 |
| Occurrence probability of an event | 1 | 0.1 | 0.1 | 1 | 0.2 |
| Degree of independence of an event from the static layer | 1 | 0.8 | 0.1 | 0.8 | 0.1 |

In Table 1, feature information of the dynamic event in each dimension is obtained after parameterization and normalization processing is performed. For the dimension, namely, the update frequency of an event status, the feature information of the events, namely, the weather status, the traffic accident, the accident-prone road section, the vehicle obstacle, and the traffic light status is 0.1, 0.5, 0.01, 1, and 0.9, respectively. Alternatively, in other words, update frequencies of the events, namely the weather condition, the traffic accident, the accident-prone road section, the vehicle obstacle, and the traffic light condition are 0.1, 0.5, 0.01, 1 and 0.9. A larger value indicates a higher update frequency. It can be seen that the two events: the vehicle obstacle and the traffic light status change frequently, so the update frequency is very high, and the two events are almost events with the highest update frequency. A status of the traffic accident also changes frequently, but does not change as fast as the vehicle obstacle and the traffic light status, so the update frequency is 0.5. However, the weather condition and the accident-prone road section change relatively little, so the update frequency is low.

For the dimension, namely, the occurrence probability of an event, the feature information of events, namely, the weather status, the traffic accident, the accident-prone road section, the vehicle obstacle, and the traffic light status is 1, 0.1, 0.1, 1, and 0.2, respectively. Alternatively, in other words, occurrence probabilities of the events, namely, the weather condition, the traffic accident, the accident-prone road section, the vehicle obstacle, and the traffic light condition are 1, 0.1, 0.1, 1 and 0.2. Similarly, a larger value indicates a higher probability of an event. The weather status and the vehicle obstacle are inevitable events, so the occurrence probabilities of the two events are 1. The traffic accident, the accident-prone road section, and the traffic light status are accidental events, so the occurrence probability is low.

For the dimension, namely, the degree of independence of an event from the static layer, the feature information of the events, namely, the weather status, the traffic accident, the accident-prone road section, the vehicle obstacle, and the traffic light status is 1, 0.8, 0.1, 0.8, and 0.1 respectively. Alternatively, in other words, the degrees of independence between the events, namely, the weather status, the traffic accident, the accident-prone road section, the vehicle obstacle, and the traffic light status and the static layer are 1, 0.8, 0.1, 0.8, and 0.1. Similarly, a larger value indicates a greater degree of independence. The events, namely, the weather status, the traffic accident, and the vehicle obstacle are less dependent on the static layer, and therefore the degrees of independence of the events are relatively great. The two events, namely, the accident-prone road section and the traffic light status need to be expressed together depending on information such as a lane and a traffic light in the static layer, and are relatively dependent, and therefore, the degrees of independence of the two events are relatively small.

It should be noted that the feature information of the dynamic event in each dimension may be preconfigured, or may be obtained through calculation based on a set condition. For example, the feature of each dimension in Table 1 is represented by a value. However, in a specific implementation process, the feature information of the dynamic event in each dimension may be represented by a level or the like. A representation manner of the feature information is not limited in this application.

S202: Determine, based on the feature information, an expression manner of the dynamic event in the high-

definition map, where the expression manner includes at least one of the extended attribute expression manner or the dynamic layer expression manner.

After the feature information of the dynamic event in the n dimensions is obtained, it is determined, based on the feature information, whether the expression manner of the dynamic event is the extended attribute expression manner or the dynamic layer expression manner.

In a specific implementation process, the expression manner of the dynamic event may be determined based on the feature information in a plurality of implementations. Examples are used below to describe several possible implementations.

The following first describes an implementation 1: The expression manner of the dynamic event is determined by using a clustering algorithm.

In this implementation, the foregoing dynamic event includes m types of dynamic events, and m is an integer greater than 1. Specifically, the feature information of each dynamic event respectively obtained in the n dimensions is n-dimensional feature information of the dynamic event in the m dynamic events in the n dimensions.

After the n-dimensional feature information of each dynamic event in the n dimensions is obtained, the n-dimensional feature information of the dynamic event may be constructed as coordinates in an n-dimensional coordinate system, to obtain m n-dimensional coordinates. The m dynamic events are classified based on the m n-dimensional coordinates by using the clustering algorithm. An expression manner of each dynamic event in the m dynamic events is determined based on the classification result.

Specifically, an n-dimensional coordinate system may be created, and n coordinate axes of the n-dimensional coordinate system represent the n dimensions. In this case, feature information of each dynamic event in the m dynamic events in the n dimensions may be represented as one n-dimensional coordinate, so that m n-dimensional coordinates may be obtained for the m dynamic events. The m n-dimensional coordinates are classified by using the clustering algorithm, and the m coordinates may be classified into two types, that is, the m dynamic events are classified into two types, where one type is expressed in the extended attribute expression manner, and the other type is expressed in the dynamic layer expression manner.

In a specific implementation process, the clustering algorithm includes a plurality of algorithms, for example, a K-Means (K-Means) clustering algorithm, a mean shift clustering algorithm, and a density-based clustering method. This application imposes no limitation on which clustering algorithm is specifically used for calculation.

For ease of understanding, the m dynamic events are classified into two types by using the clustering algorithm. The following describes an example in which the K-Means clustering algorithm is used. Algorithm steps of the K-Means clustering algorithm include: (1) randomly dividing data points of the m n-dimensional coordinates into two groups, and randomly initializing respective central points of the two groups; (2) calculating a distance between each data point and a corresponding center point, and classifying the data point into a type to which the data point closest to the center point belongs; (3) calculating the center point of each type as a new center point; and (4) repeating the foregoing steps until the center point of each type does not change much after each iteration. Alternatively, the center point may be initialized randomly for many times, and then calculation is performed based on the foregoing four steps to select the one with the best calculation result.

Using three dimensions and five events in Table 1 as an example, a three-dimensional coordinate system may be constructed. Three coordinate axes of the coordinate system respectively represent three dimensions: the update frequency of an event status, the occurrence probability of an event, and the degree of independence of an event from the static layer. The five events: the weather status, the traffic accident, the accident-prone road section, the vehicle obstacle, and the traffic light status are represented as five data points in the three-dimensional coordinate axes, and three-dimensional coordinates of the five data points are respectively (0.1, 1, 1), (0.5, 0.1, 0.8), (0.01, 0.1, 0.1), (1, 1, 0.8), and (0.9, 0.2, 0.1).

Then, the five points are classified by using the algorithm steps of the K-Means clustering algorithm, and a final classification result is that the data point (0.1, 1, 1) and the data point (1, 1, 0.8) are classified into one type, that is, the weather status and the vehicle obstacle are classified into one type, and the data point (0.5, 0.1, 0.8), the data point (0.01, 0.1, 0.1), and the data point (0.9, 0.2, 0.1) are classified into one type, that is, traffic accident, accident-prone road section, and traffic light status are classified into one type.

In a possible implementation, after the m dynamic events are classified into two types, feature information of the two types of dynamic events in the n dimensions may be further analyzed. Because the feature information mainly represents a degree of association between the dynamic event and the static layer, after analysis, a type of dynamic events with a great degree of association with the static layer may be classified as an event expressed in the extended attribute expression manner, and another type of dynamic events with a small degree of association with the static layer may be classified as an event expressed in the dynamic layer expression manner.

For ease of understanding of a degree of association between a dynamic event and the static layer, the following uses the foregoing dimensions as an example for description.

For the dimension, namely, the update frequency of an event status, a dynamic event with a lower update

frequency has a greater degree of association with the static layer, and a dynamic event with a higher update frequency has a smaller degree of association with static layer.

For the dimension, namely, the occurrence probability of an event, a dynamic event with a lower occurrence probability has a greater degree of association with the static layer, and a dynamic event with a higher occurrence probability has a smaller degree of association with the static layer.

For the dimension, namely, the degree of impact of an event on a topology of the high-definition map, a dynamic event with a smaller degree of impact on the topology of the high-definition map has a greater degree of association with the static layer, and a dynamic event with a greater degree of impact on the topology of the high-definition map has a smaller degree of association with the static layer.

For the dimension, namely, the degree of an association change of an event, a dynamic event with a smaller degree of an association change has a greater degree of association with the static layer, and a dynamic event with a greater degree of association change has a smaller degree of association with the static layer.

For the dimension, namely, the reusability of geometric expression of an event for the static layer, a dynamic event whose geometric expression has higher reusability for the static layer has a greater degree of association with the static layer, and a dynamic event whose geometric expression has lower reusability for the static layer has a smaller degree of association with the static layer.

For the dimension, namely, the degree of independence of an event from the static layer, a dynamic event with a smaller degree of independence from the static layer has a greater degree of association with the static layer, and a dynamic event with a greater degree of independence from the static layer has a smaller degree of association with the static layer.

For ease of understanding, specific expression manners of the two types of dynamic events obtained through classification are determined based on the degree of association between the dynamic event and the static layer, the following uses an example for description. In the foregoing example, a classification result has been obtained: a first type includes the weather status and the vehicle obstacle, and a second type includes the traffic accident, the accident-prone road section, and the traffic light status. Through analysis on independence of the two types of dynamic events from the static layer in the three dimensions, namely, the update frequency of an event status, the occurrence probability of an event, and the degree of independence of an event from the static layer, it is found that, the first-type dynamic event has a smaller degree of association with the static layer than the second-type dynamic event. Therefore, the first-type dynamic event is expressed in the dynamic layer expression manner, and the second-type dynamic event is expressed in the extended attribute expression manner.

The following describes an implementation 2: The expression manner of the dynamic event is determined by using a voting mechanism.

In this implementation, a dynamic event is used as an example for description. The dynamic event may be referred to as a first dynamic event. Specifically, the feature information of each dynamic event respectively obtained in the n dimensions includes n-dimensional feature information of the first dynamic event in the n dimensions.

After the n-dimensional feature information of the first dynamic event in the n dimensions is obtained, a determining result of an expression manner of the first dynamic event in each single dimension is determined based on feature information in the single dimension in the n-dimensional feature information of the first dynamic event. In this way, n determining results are obtained, where the determining result includes that the expression manner of the first dynamic event is at least one of the extended attribute expression manner or the dynamic layer expression manner. Then, it is determined that the expression manner of the dynamic event in the high-definition map is an expression manner that accounts for a largest proportion in the n determining results.

Specifically, it is determined, based on the voting mechanism, that the first dynamic event is expressed in the extended attribute expression manner in p1 dimensions of the n dimensions, and is expressed in the dynamic layer expression manner in p2 dimensions of the n dimensions. Then, values of p1 and p2 are compared. If p1 is greater than p2, the first dynamic event is expressed in the extended attribute expression manner. If p2 is greater than p1, the first dynamic event is expressed in the dynamic layer expression manner. Alternatively, p1 and p2 are separately compared with n/2. If p1 is greater than n/2, the first dynamic event is expressed in the extended attribute expression manner, or if p2 is greater than n/2, the first dynamic event is expressed in the dynamic layer expression manner.

If the first dynamic event is expressed in the extended attribute expression manner in a dimension, it indicates that a degree of association between the first dynamic event and the static layer in the dimension is great. If the first dynamic event is expressed in the dynamic layer expression manner in a dimension, it indicates that a degree of association between the first dynamic event and the static layer in the dimension is small.

For ease of understanding, an example is used for description, reference is still made to the foregoing Table 1. The weather status event in Table 1 is used as an example for description. It can be learned from Table 1 that feature information of the weather status is 0.1, 1, and 1 in three dimensions: the update frequency of an event status, the occurrence probability of an event, and the degree of independence of an event form the static layer, where the feature information of the weather status is both 1 in the two dimensions: the occurrence probability of an event, and the degree of

independence of an event from the static layer, it indicates that the weather status is almost unassociated with the static layer in the two dimensions. Therefore, it may be determined in the two dimensions that the weather status is expressed in the dynamic layer expression manner. In the dimension, namely, the update frequency of an event status, a degree of association between the weather status and the static layer is great, which indicates that the weather status is expressed in the extended attribute expression manner. However, dimensions in which the weather status is expressed in the dynamic layer expression manner are more, and there are more than 3/2 dimensions. Therefore, it is determined that the weather status is expressed in the dynamic layer expression manner.

The following describes an implementation 3: The expression manner of the dynamic event is determined by using a priority mechanism.

In this implementation, the first dynamic event is also used as an example for description. Specifically, it is determined an expression manner of the first dynamic event is evaluated from n dimensions, and the n dimensions have priorities. For example, the expression manner may be evaluated from a dimension with a highest priority, that is, an expression manner indicated from the dimension with the highest priority is the expression manner of the first dynamic event.

The weather status in Table 1 is still used as an example. Table 1 provides three dimensions: the update frequency of an event status, the occurrence probability of an event, and the degree of independence of an event from the static layer for evaluating the expression manner of the dynamic event. However, priorities of the three dimensions are in descending order: the degree of independence of an event from the static layer, the update frequency of an event status, and the occurrence probability of an event. Therefore, the expression manner of the weather status is evaluated from the dimension, namely, the degree of independence of an event from the static layer. In Table 1, the feature information is 1 in the dimension, namely, the degree of independence of an event from the static layer, indicating that the weather status is almost unassociated with the static layer. Therefore, it is determined that the weather status is expressed in the dynamic layer expression manner.

It should be noted that the foregoing describes only several implementations of determining, based on the feature information, the expression manner of the dynamic event as examples. In a specific embodiment, this is not limited to the foregoing implementations.

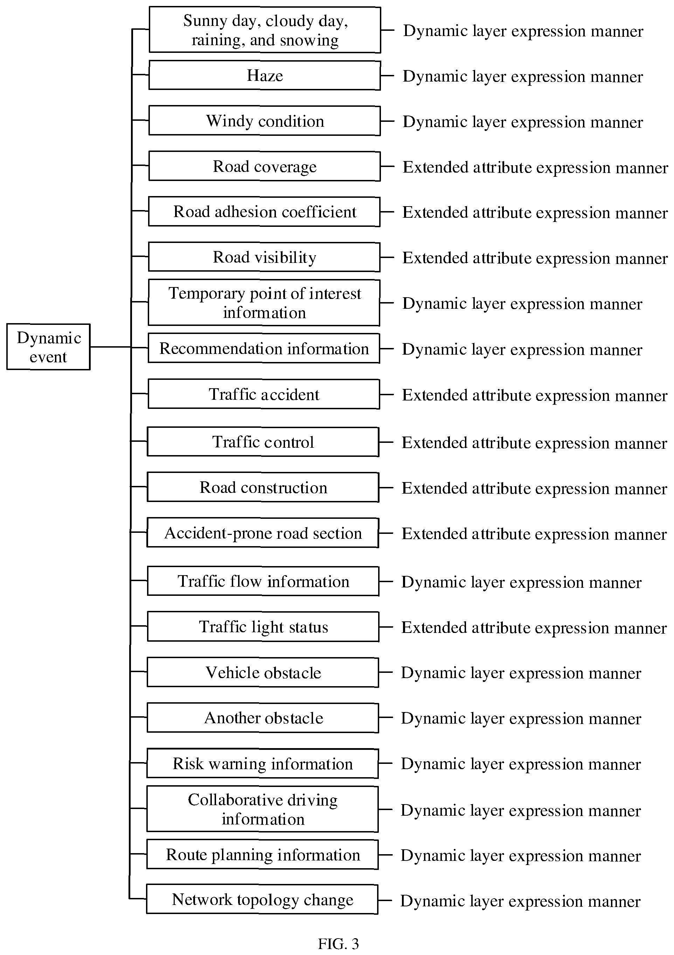

Expression manners of various dynamic events may be determined in the foregoing described manners. For example, FIG. 3 lists expression manners corresponding to the various dynamic events. However, FIG. 3 is merely an example. In a specific implementation process, some dynamic events may be expressed in the extended attribute expression manner, or may be expressed in the dynamic layer expression manner. Therefore, there is no limitation that a dynamic event can be expressed in only one expression manner. In addition, expression manners of the dynamic event obtained by using different implementations of determining the dynamic event may be different, and a specific expression manner of the dynamic event is determined based on an actually used expression manner determining method.

In a possible implementation, after the expression manners of the various dynamic events are determined, the various dynamic events and the expression manners corresponding to the various dynamic events may be stored in a memory in an associated manner, so that the various dynamic events and the expression manners corresponding to the various dynamic events can be directly obtained and used subsequently without being recalculated each time for use, thereby saving computing resources. Certainly, when a new dynamic event occurs, an expression manner of the new dynamic event may also be determined based on the method described above, and stored for subsequent use.

S203: Express the dynamic event in the high-definition map based on the determined expression manner of the dynamic event.

After the expression manner of the dynamic event is determined, the dynamic event may be expressed in the high-definition map based on the expression manner.

The following describes a process of expressing the dynamic event in the high-definition map after the various expression manners of the dynamic event are determined.

A dynamic event in the plurality of dynamic events is used as an example for description. The dynamic event may be referred to as a second dynamic event. In a specific embodiment, the high-definition map may run in a server, or may run in a vehicle. That the high-definition map runs in the server is used as an example. When a device such as the vehicle needs to obtain the high-definition map, the device may obtain a high-definition map of an area through interaction with the server. The server may obtain information about various dynamic events through monitoring, or obtain dynamic events through interaction with another server, a roadside device, or the vehicle. For example, the server may obtain information about various dynamic events of a weather status through interaction with a server of a meteorological bureau. For another example, the server may obtain information about various traffic events through interaction with a server of a traffic bureau, and then express the obtained information about the dynamic event in the high-definition map.

In a specific embodiment, the server obtains latest information of the second dynamic event, and specifically may further obtain information such as a specific type, an occurrence location, and a description of a latest status of the second dynamic event, and then find the second dynamic event in the memory and obtain an expression manner corresponding to the second dynamic event.

In a possible implementation, the expression manner corresponding to the second dynamic event is the extended attribute expression manner. In this case, if the information about the second dynamic event is obtained for the first time, an extended attribute table may be created for the second dynamic event, and the latest information of the second dynamic event is added to the extended attribute table, where the latest information may include information such as the description of the latest status of the second dynamic event. Then, the extended attribute table is associated with the static layer.

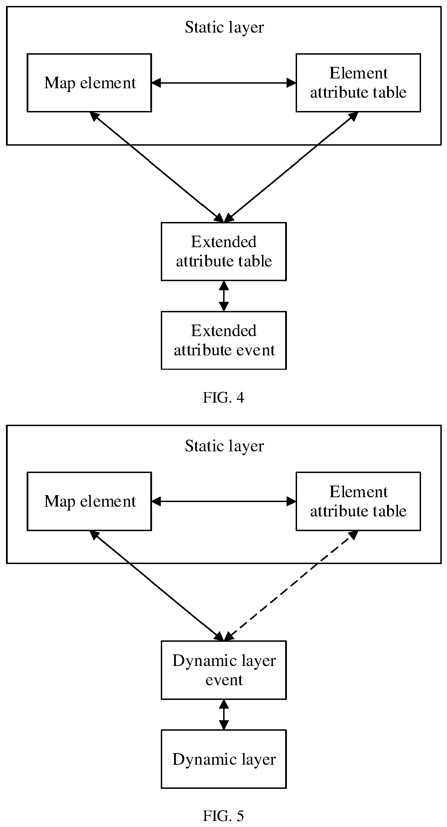

For example, refer to FIG. 4. The extended attribute table is associated with the static layer. The extended attribute table may be associated with a map element in a static layer of a corresponding location based on information about a location at which the second dynamic event occurs, and is associated with an element attribute table of the map element. An extended attribute event in FIG. 4 is the second dynamic event. The element attribute table of the map element includes information such as some static attributes of the map element. For example, if the map element is one lane, an element attribute table of the lane may include a marking condition, a lane quantity condition, and the like of the vehicle. If the second dynamic event is a road adhesion coefficient, and the description of the latest status is that the road adhesion coefficient falls within a range of 0.3 to 0.4, the description of the latest state may be added to the created extended attribute table, and is associated with the lane in the static layer and the element attribute table of the lane. In this way, when reading attribute information in the lane, the server may obtain a latest road adhesion coefficient of the lane, and express the latest road adhesion coefficient in the high-definition map.

If the server does not obtain the second dynamic event for the first time, the server may update the obtained description of the latest status to the extended attribute table of the second dynamic event, so that the information expressed by the server in the high-definition map is information of the latest status.

In another possible implementation, the expression manner corresponding to the second dynamic event is the dynamic layer expression manner. In this case, if the second dynamic event has no dynamic layer associated with the second dynamic event, a dynamic layer associated with the second dynamic event may be created. The dynamic layer is associated with the static layer of the high-definition map. It should be noted that one dynamic layer may include one or more dynamic events, and is not limited to one dynamic layer having only one dynamic event.

For example, refer to FIG. 5. The dynamic layer event described in FIG. 5 is a dynamic event expressed in the dynamic layer. It is assumed that the second dynamic event is expressed in the dynamic layer, the dynamic layer is associated with the static layer of the high-definition map. The second dynamic event may be associated with a corresponding map element in the static layer based on the location information at which the second dynamic event occurs. In addition, optionally, the second dynamic event may be further associated with the element attribute table corresponding to the static layer. Because this is an optional operation, association between the dynamic layer event and the element attribute table in FIG. 5 is represented by using a dashed line.

The dynamic event in the dynamic layer may also be associated with an attribute table. Similarly, the attribute table may be used to record information such as a latest status description of the dynamic event. For example, the second dynamic event may be a weather status, a dynamic layer may be specially created to express the weather status, and an occurrence location corresponding to the weather status is in a small town. When the latest status description is that it rains moderately and lasts for about half an hour, the server may describe the weather status of the town area in the dynamic layer as moderate rain, and the weather status lasts for about half an hour.

If the second dynamic event already has an associated dynamic layer after the second dynamic event is obtained, the latest status description of the second dynamic event is directly updated to a corresponding location in the dynamic layer, so that information expressed by the server in the high-definition map is the latest status information.

Optionally, the high-definition map generally includes a plurality of dynamic layers. Therefore, for ease of management, the plurality of dynamic layers may be encoded, and the encoding is associated with a dynamic event in the dynamic layer indicated by the encoding, so that when a dynamic event is updated, a corresponding layer can be quickly locked based on corresponding layer coding and the updated information is quickly updated to the dynamic layer.

In conclusion, this application provides a high-definition map update method and device, and can provide a feasible and effective high-definition map update method, to improve event expression of a high-definition map, and improve accuracy of the event expression of the high-definition map.

The foregoing mainly describes the high-definition map update method provided in embodiments of this application. It may be understood that, to implement the foregoing functions, each device includes corresponding hardware structures and/or software modules for performing corresponding functions. Persons skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. Persons skilled in the art may use different methods to implement the described functions for each particular application, but it should not be considered that the implementation goes beyond the scope of this application.

In embodiments of this application, the device may be divided into functional modules based on the foregoing

method examples. For example, each functional module may be obtained through division based on each corresponding function, or two or more functions may be integrated into one module. The integrated module may be implemented in a form of hardware, or may be implemented in a form of a software functional module. It should be noted that, in embodiments of this application, division into modules is an example, and is merely a logical function division. In an actual implementation, another division manner may be used.

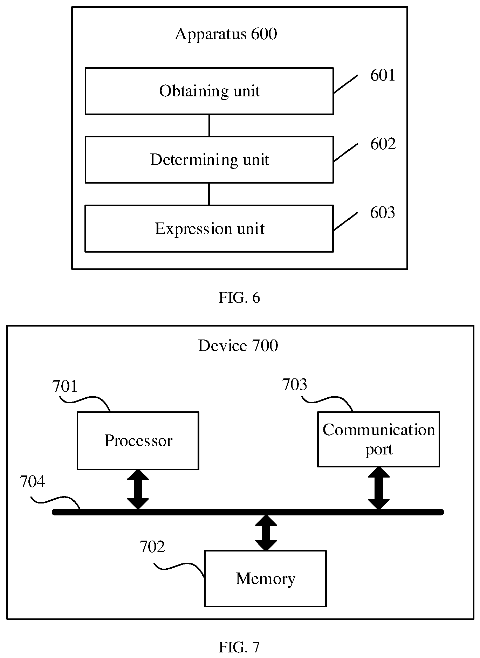

When each functional module is obtained through division corresponding to each function, FIG. 6 is a schematic diagram of a possible logical structure of an apparatus. The apparatus may be the foregoing map update apparatus, or may be a chip in the map update apparatus, or may be a processing system or the like in the map update apparatus. The apparatus 600 includes an obtaining unit 601, a determining unit 602, and an expression unit 603.

The obtaining unit 601 is configured to obtain n-dimensional feature information of a dynamic event in n dimensions, where the n dimensions are n factors that affect expression of the dynamic event in a high-definition map, the dynamic event is an event that causes dynamic information in the high-definition map to change, and n is an integer greater than 1. The obtaining unit 601 can execute the operation in S201 shown in FIG. 2.

The determining unit 602 is configured to determine, based on the feature information, an expression manner of the dynamic event in the high-definition map. The determining unit 602 may execute the operation in S202 shown in FIG. 2.

The expression unit 603 is configured to express the dynamic event in the high-definition map based on the determined expression manner of the dynamic event. The expression unit 603 may execute the operation in S203 shown in FIG. 2.

According to the invention, the n dimensions include at least two of the following dimensions:
an update frequency of a dynamic event status, an occurrence probability of an event, a degree of impact of an event on a topology of the high-definition map, a degree of an association change of an event, reusability of geometric expression of an event for the static layer, or a degree of independence of an event from the static layer.

When the dynamic event includes a plurality of dynamic events,
the obtaining unit 601 is specifically configured to:

obtain n-dimensional feature information of the plurality of dynamic events in the n dimensions; and
the determining unit 602 is specifically configured to:
determine, based on the n-dimensional feature information of the plurality of dynamic events in the n dimensions by using a clustering algorithm, expression manners of the plurality of dynamic events in the high-definition map.

In a possible implementation, the determining unit 602 is specifically configured to:

classify, by using the clustering algorithm, the plurality of dynamic events to obtain a first-type dynamic event and a second-type dynamic event; and
in a case of determining, through analysis based on n-dimensional feature information of the first-type dynamic event and n-dimensional feature information of the second-type dynamic event, that a degree of association between the first-type dynamic event and the static layer in the high-definition map is greater than a degree of association between the second-type dynamic event and the static layer in the high-definition map, classify the first-type dynamic event as an event expressed in the extended attribute expression manner, and classify the second-type dynamic event as an event expressed in the dynamic layer expression manner.

In a possible implementation, when the dynamic event includes a first dynamic event, the expression unit 602 is specifically configured to:

determine a determining result of an expression manner of the first dynamic event in each single dimension based on feature information in the single dimension in the n-dimensional feature information, to obtain n determining results, where the determining result includes that the expression manner of the first dynamic event is at least one of the extended attribute expression manner or the dynamic layer expression manner; and
determine that the expression manner of the dynamic event in the high-definition map is an expression manner that accounts for a largest proportion in the n determining results.

In a possible implementation, the device further includes a storage unit, configured to: after the determining unit 602 determines, based on the feature information, the expression manner of the dynamic event in the high-definition map, store the dynamic event and the expression manner of the dynamic event in a memory in an associated manner.

In a possible implementation, the expression unit 603 is specifically configured to:

obtain latest information of the second event, and obtain, from the memory, an expression manner of the dynamic event;

determine that the expression manner of the dynamic event is the extended attribute expression manner; and create an extended attribute table based on the latest information of the dynamic event, and associate the created extended attribute table with the static layer in the high-definition map; or
modify an extended attribute table of the dynamic event based on the latest information of the dynamic event.

In a possible implementation, the expression unit 603 is specifically configured to:

obtain latest information of the dynamic event, and obtain, from the memory, an expression manner of the dynamic event;
determine that the expression manner of the dynamic event is the dynamic layer expression manner; and create a dynamic layer based on the latest information of the dynamic event; or
modify, based on the latest information of the dynamic event, a dynamic layer to which the dynamic event belongs.

For specific operations of the units in the apparatus 600 shown in FIG. 6 and beneficial effects, refer to the descriptions in the method and the possible implementations of the method in FIG. 2. Details are not described herein again.

FIG. 7 is a schematic diagram of a possible hardware structure of a device according to this application. The device may be the map update apparatus in the method in the foregoing embodiments. The device 700 includes a processor 701, a memory 702, and a communication port 703. The processor 701, the communication port 703, and the memory 702 may be connected to each other or connected to each other by using a bus 704.

For example, the memory 702 is configured to store a computer program and data of the device 700. The memory 702 may include but is not limited to a random access memory (random access memory, RAM), a read-only memory (read-only memory, ROM), an erasable programmable read-only memory (erasable programmable read-only memory, EPROM), a portable read-only memory (compact disc read-only memory, CD-ROM), and the like.

When the embodiment shown in FIG. 7 is implemented, software or program code used for performing functions of all or some units in FIG. 7 is stored in the memory 702.

In the case of implementing the embodiment in FIG. 7, if software or program code used by functions of some units is stored in the memory 702, the processor 701, in addition to invoking the program code in the memory 702 to implement some functions, may cooperate with another component (for example, the communication port 703) to jointly complete another function (for example, a data receiving function) described in the embodiment in FIG. 7.

There may be a plurality of communication ports 703 that are configured to support the device 700 in performing communication, for example, receiving or sending data or a signal.

For example, the processor 701 may be a central processing unit, a general-purpose processor, a digital signal processor, an application-specific integrated circuit, a field programmable gate array or another programmable logic device, a transistor logic device, a hardware component, or any combination thereof. Alternatively, the processor may be a combination of processors implementing a computing function, for example, a combination of one or more microprocessors, or a combination of the digital signal processor and a microprocessor. The processor 701 may be configured to read the program stored in the memory 702, and perform the method in FIG. 2 and the method in the possible implementation. For example, the processor 701 may perform the following operations:

obtaining n-dimensional feature information of a dynamic event in n dimensions, where the n dimensions are n factors that affect expression of the dynamic event in a high-definition map, the dynamic event is an event that causes dynamic information in the high-definition map to change, and n is an integer greater than 1, where the obtaining operation may be the operation in step S201 shown in FIG. 2;
determining, based on the n-dimensional feature information, an expression manner of the dynamic event in the high-definition map, where the determining operation may be the operation in step S202 shown in FIG. 2; and
expressing the dynamic event in the high-definition map based on the determined expression manner of the dynamic event, where the expressing operation may be the operation in step S203 shown in FIG. 2.

For specific operations executed by the device 700 shown in FIG. 7 and beneficial effects, refer to the descriptions in the method and the possible implementations of the method in FIG. 2. Details are not described herein again.

An embodiment of this application further provides an apparatus. The apparatus includes a processor, a communication port, and a memory. The apparatus is configured to perform the method in any one of the foregoing embodiments and the possible embodiments of the foregoing embodiments.

In a possible implementation, the apparatus is a chip or a system on a chip (System on a Chip, SoC).

An embodiment of this application further provides a computer-readable storage medium. The computer-readable storage medium stores a computer program. The computer program is executed by a processor to implement the method in any one of the foregoing embodiments and the possible embodiments of the foregoing embodiments.

An embodiment of this application further provides a computer program product. When the computer program product is read and executed by a computer, the method in any one of the foregoing embodiments and the possible embodiments of the foregoing embodiments is performed.

An embodiment of this application further provides a computer program. When the computer program is executed on a computer, the computer is enabled to implement the method in any one of the foregoing embodiments and the possible embodiments of the foregoing embodiments.

An embodiment of this application further provides a high-definition map. The high-definition map includes a static layer and/or a dynamic layer for presenting dynamic information. An expression manner of the dynamic information in the static layer and/or the dynamic layer is determined by the high-definition map update method in any one of the foregoing embodiments and the possible embodiments of the foregoing embodiments.

In conclusion, in this application, the expression manner of the dynamic event in the high-definition map is evaluated from a plurality of dimensions, so that an expression manner of each dynamic event can be accurately determined, and automatic processing is easily implemented. Compared with the conventional technology, this application provides a feasible and efficient high-definition map update method. Thus, event expression of the high-definition map can be improved, and accuracy and automation of the event expression of the high-definition map are improved.

In this application, terms such as "first" and "second" are used to distinguish same items or similar items that have basically same effects and functions. It should be understood that there is no logical or time sequence dependency between "first", "second", and "$n^{th}$". A quantity and an execution sequence are not limited. It should also be understood that although terms such as "first" and "second" are used in the following descriptions to describe various elements, these elements should not be limited by the terms. These terms are merely used to distinguish one element from another element. For example, without departing from the scope of the various examples, a first image may be referred to as a second image, and similarly, a second image may be referred to as a first image. Both the first image and the second image may be images, and in some cases, may be separate and different images.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application.

It should be further understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or their components not excluded.

It should further be understood that "one embodiment", "an embodiment", or "a possible implementation" mentioned throughout this specification means that particular features, structures, or characteristics related to the embodiments or implementations are included in at least one embodiment of this application. Therefore, "in one embodiment", "in an embodiment", or "in a possible implementation" appearing throughout this specification does not necessarily mean a same embodiment. In addition, these particular features, structures, or characteristics may be combined in one or more embodiments by using any appropriate manner.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the invention, which is defined by the appended claims.

## Claims

**1.** A high-definition map update method, wherein the method comprises:
obtaining (S201), by a map update apparatus, n-dimensional feature information of a dynamic event in n dimensions, wherein the n dimensions are n factors that affect expression of the dynamic event in a high-definition map, the dynamic event is an event that causes dynamic information in the high-definition map to change, and n is an integer greater than 1, wherein the n dimensions comprise at least two of the following dimensions:

an update frequency of a dynamic event status, an occurrence probability of an event, a degree of impact of an event on a topology of the high-definition map, a degree of an association change of an event, reusability of geometric expression of an event for the static layer, or a degree of independence of an event from the static layer;
determining (S202), by the map update apparatus based on the n-dimensional feature information, an expression manner of the dynamic event in the high-definition map, wherein the expression manner comprises an extended attribute expression manner and a dynamic layer expression manner,

the extended attribute expression manner is an expression manner of associating the dynamic event with a static layer in the high-definition map and using the dynamic event as an extended attribute of a static layer element, wherein the extended attribute is a coverage of an existing attribute of the static map element to express an attribute change of the static map element or an extended addition of an attribute of the static map element, and the dynamic layer expression manner is a manner of adding the dynamic event to a dynamic layer in the high-definition map for expression, wherein the determination is performed using a clustering algorithm, a voting mechanism or a priority mechanism; and

expressing (S203), by the map update apparatus, the dynamic event in the high-definition map based on the determined expression manner of the dynamic event.

**2.** The method according to claim 1, wherein when the dynamic event comprises a plurality of dynamic events, the obtaining, by a map update apparatus, n-dimensional feature information of a dynamic event in n dimensions comprises:

obtaining, by the map update apparatus, n-dimensional feature information of the plurality of dynamic events in the n dimensions; and

the determining, by the map update apparatus based on the n-dimensional feature information, an expression manner of the dynamic event in the high-definition map comprises:

determining, by the map update apparatus based on the n-dimensional feature information of the plurality of dynamic events in the n dimensions by using a clustering algorithm, expression manners of the plurality of dynamic events in the high-definition map.

**3.** The method according to claim 2, wherein the determining, by using a clustering algorithm, expression manners of the plurality of dynamic events in the high-definition map comprises:

classifying, by the map update apparatus by using the clustering algorithm, the plurality of dynamic events to obtain a first-type dynamic event and a second-type dynamic event; and

in a case of determining, through analysis based on n-dimensional feature information of the first-type dynamic event and n-dimensional feature information of the second-type dynamic event, that a degree of association between the first-type dynamic event and the static layer in the high-definition map is greater than a degree of association between the second-type dynamic event and the static layer in the high-definition map, classifying, by the map update apparatus, the first-type dynamic event as an event expressed in the extended attribute expression manner, and classifying the second-type dynamic event as an event expressed in the dynamic layer expression manner.

**4.** The method according to claim 1, wherein when the dynamic event comprises a first dynamic event, the determining, by the map update apparatus based on the n-dimensional feature information, an expression manner of the dynamic event in the high-definition map comprises:

determining, by the map update apparatus, a determining result of an expression manner of the first dynamic event in each single dimension based on feature information in the single dimension in the n-dimensional feature information, to obtain n determining results, wherein the determining result comprises that the expression manner of the first dynamic event is one of the extended attribute expression manner or the dynamic layer expression manner; and

determining, by the map update apparatus, that the expression manner of the dynamic event in the high-definition map is an expression manner that accounts for a largest proportion in the n determining results.

**5.** The method according to any one of claims 1 to 4, wherein after the determining, by the map update apparatus based on the n-dimensional feature information, an expression manner of the dynamic event in the high-definition map, the method further comprises:
storing, by the map update apparatus, the dynamic event and the expression manner of the dynamic event in a memory (702) in an associated manner.

**6.** The method according to claim 5, wherein the expressing, by the map update apparatus, the dynamic event in the high-definition map based on the determined expression manner of the dynamic event comprises:
obtaining, by the map update apparatus, latest information of the dynamic event, and obtaining, from the memory (702), an expression manner of the dynamic event:

determining, by the map update apparatus, that the expression manner of the dynamic event is the extended attribute expression manner; and
creating, by the map update apparatus, an extended attribute table based on the latest information of the dynamic event, and associating the created extended attribute table with the static layer in the high-definition map; or modifying, by the map update apparatus, an existing extended attribute table based on the latest information of the dynamic event.

7. The method according to claim 5, the expressing, by the map update apparatus, the dynamic event in the high-definition map based on the determined expression manner of the dynamic event comprises:

obtaining, by the map update apparatus, latest information of the dynamic event, and obtaining, from the memory (702), an expression manner of the dynamic event;
determining, by the map update apparatus, that the expression manner of the dynamic event is the dynamic layer expression manner; and
creating, by the map update apparatus, a dynamic layer based on the latest information of the dynamic event, or modifying an existing dynamic layer based on the latest information of the dynamic event.

8. A high-definition map update apparatus (600), comprising units configured to perform the steps in the method according to any one of claims 1 to 7.

9. A computer-readable storage medium, comprising a program, wherein when the program is executed by a processor (701), the method according to any one of claims 1 to 7 is performed.

10. A high-definition map, wherein the high-definition map comprises at least one of a static layer that carries dynamic information or a dynamic layer that carries dynamic information, and an expression manner of the dynamic information in the high-definition map is determined by using the method according to any one of claims 1 to 7.

## Patentansprüche

1. Verfahren zur Aktualisierung einer hochauflösenden Karte, wobei das Verfahren Folgendes umfasst:

Erhalten (S201), durch eine Kartenaktualisierungseinrichtung, von n-dimensionalen Merkmalsinformationen eines dynamischen Ereignisses in n Dimensionen, wobei die n Dimensionen n Faktoren sind, die einen Ausdruck des dynamischen Ereignisses in einer hochauflösenden Karte beeinflussen, das dynamische Ereignis ein Ereignis ist, das eine Änderung dynamischer Informationen in der hochauflösenden Karte bewirkt, und n eine ganze Zahl größer als 1 ist, wobei die n Dimensionen mindestens zwei der folgenden Dimensionen umfassen: eine Aktualisierungshäufigkeit eines Status des dynamischen Ereignisses, eine Auftrittswahrscheinlichkeit eines Ereignisses, einen Grad der Auswirkung eines Ereignisses auf eine Topologie der hochauflösenden Karte, einen Grad einer Assoziationsänderung eines Ereignisses, eine Wiederverwendbarkeit eines geometrischen Ausdrucks eines Ereignisses für die statische Schicht oder einen Grad der Unabhängigkeit eines Ereignisses von der statischen Schicht;
Bestimmen (S202), durch die Kartenaktualisierungseinrichtung basierend auf den n-dimensionalen Merkmalsinformationen, einer Ausdrucksart des dynamischen Ereignisses in der hochauflösenden Karte, wobei die Ausdrucksart eine Ausdrucksart eines erweiterten Attributs und eine Ausdrucksart einer dynamischen Schicht beinhaltet, die Ausdrucksart eines erweiterten Attributs eine Ausdrucksart des Assoziierens des dynamischen Ereignisses mit einer statischen Schicht in der hochauflösenden Karte und des Verwendens des dynamischen Ereignisses als ein erweitertes Attribut eines statischen Schichtelements ist, wobei das erweiterte Attribut eine Abdeckung eines bestehenden Attributs des statischen Kartenelements ist, um eine Attributänderung des statischen Kartenelements oder eine erweiterte Hinzufügung eines Attributs des statischen Kartenelements auszudrücken, und die Ausdrucksart einer dynamischen Schicht eine Art des Hinzufügens des dynamischen Ereignisses zu einer dynamischen Schicht in der hochauflösenden Karte zum Ausdruck ist, wobei die Bestimmung unter Verwendung eines Clustering-Algorithmus, eines Abstimmungsmechanismus oder eines Prioritätsmechanismus durchgeführt wird; und
Ausdrücken (S203), durch die Kartenaktualisierungseinrichtung, des dynamischen Ereignisses in der hochauflösenden Karte basierend auf der bestimmten Ausdrucksart des dynamischen Ereignisses.

2. Verfahren nach Anspruch 1, wobei, wenn das dynamische Ereignis mehrere dynamische Ereignisse umfasst, das

Erhalten, durch eine Kartenaktualisierungseinrichtung, von n-dimensionalen Merkmalsinformationen eines dynamischen Ereignisses in n Dimensionen Folgendes umfasst:

Erhalten, durch die Kartenaktualisierungseinrichtung, von n-dimensionalen Merkmalsinformationen der mehreren dynamischen Ereignisse in den n Dimensionen; und
das Bestimmen, durch die Kartenaktualisierungseinrichtung basierend auf den n-dimensionalen Merkmalsinformationen, einer Ausdrucksart des dynamischen Ereignisses in der hochauflösenden Karte Folgendes umfasst:
Bestimmen, durch die Kartenaktualisierungseinrichtung basierend auf den n-dimensionalen Merkmalsinformationen der mehreren dynamischen Ereignisse in den n Dimensionen unter Verwendung eines Clustering-Algorithmus, von Ausdrucksarten der mehreren dynamischen Ereignisse in der hochauflösenden Karte.

**3.** Verfahren nach Anspruch 2, wobei das Bestimmen, unter Verwendung eines Clustering-Algorithmus, von Ausdrucksarten der mehreren dynamischen Ereignisse in der hochauflösenden Karte Folgendes umfasst:

Klassifizieren, durch die Kartenaktualisierungseinrichtung unter Verwendung des Clustering-Algorithmus, der mehreren dynamischen Ereignisse, um ein dynamisches Ereignis eines ersten Typs und ein dynamisches Ereignis eines zweiten Typs zu erhalten; und
wenn durch Analyse basierend auf n-dimensionalen Merkmalsinformationen des dynamischen Ereignisses des ersten Typs und n-dimensionalen Merkmalsinformationen des dynamischen Ereignisses des zweiten Typs bestimmt wird, dass ein Grad der Assoziation zwischen dem dynamischen Ereignis des ersten Typs und der statischen Schicht in der hochauflösenden Karte größer als ein Grad der Assoziation zwischen dem dynamischen Ereignis des zweiten Typs und der statischen Schicht in der hochauflösenden Karte ist, Klassifizieren, durch die Kartenaktualisierungseinrichtung, des dynamischen Ereignisses des ersten Typs als ein Ereignis, das in der Ausdrucksart eines erweiterten Attributs ausgedrückt wird, und Klassifizieren des dynamischen Ereignisses des zweiten Typs als ein Ereignis, das in der Ausdruckart einer dynamischen Schicht ausgedrückt wird.

**4.** Verfahren nach Anspruch 1, wobei, wenn das dynamische Ereignis ein erstes dynamisches Ereignis umfasst, das Bestimmen, durch die Kartenaktualisierungseinrichtung basierend auf den n-dimensionalen Merkmalsinformationen, einer Ausdrucksart des dynamischen Ereignisses in der hochauflösenden Karte Folgendes umfasst:

Bestimmen, durch die Kartenaktualisierungseinrichtung, eines Bestimmungsergebnisses einer Ausdrucksart des ersten dynamischen Ereignisses in jeder einzelnen Dimension basierend auf Merkmalsinformationen in der einzelnen Dimension in den n-dimensionalen Merkmalsinformationen, um n Bestimmungsergebnisse zu erhalten, wobei das Bestimmungsergebnis umfasst, dass die Ausdrucksart des ersten dynamischen Ereignisses entweder die Ausdrucksart eines erweiterten Attributs oder die Ausdrucksart einer dynamischen Schicht ist; und
Bestimmen, durch die Kartenaktualisierungseinrichtung, dass die Ausdrucksart des dynamischen Ereignisses in der hochauflösenden Karte eine Ausdrucksart ist, die einen größten Anteil in den n Bestimmungsergebnissen ausmacht.

**5.** Verfahren nach einem der Ansprüche 1 bis 4, wobei das Verfahren nach dem Bestimmen, durch die Kartenaktualisierungseinrichtung basierend auf den n-dimensionalen Merkmalsinformationen, einer Ausdrucksart des dynamischen Ereignisses in der hochauflösenden Karte ferner Folgendes umfasst:
Speichern, durch die Kartenaktualisierungseinrichtung, des dynamischen Ereignisses und der Ausdrucksart des dynamischen Ereignisses in einem Speicher (702) auf assoziierte Art.

**6.** Verfahren nach Anspruch 5, wobei

das Ausdrücken, durch die Kartenaktualisierungseinrichtung, des dynamischen Ereignisses in der hochauflösenden Karte basierend auf der bestimmten Ausdrucksart des dynamischen Ereignisses Folgendes umfasst:
Erhalten, durch die Kartenaktualisierungseinrichtung, jüngster Informationen des dynamischen Ereignisses und Erhalten, aus dem Speicher (702), einer Ausdrucksart des dynamischen Ereignisses;
Bestimmen, durch die Kartenaktualisierungseinrichtung, dass die Ausdrucksart des dynamischen Ereignisses die Ausdrucksart eines erweiterten Attributs ist; und
Erzeugen, durch die Kartenaktualisierungseinrichtung, einer Tabelle erweiterter Attribute basierend auf den jüngsten Informationen des dynamischen Ereignisses und Assoziieren der erzeugten Tabelle erweiterter Attribute mit der statischen Schicht in der hochauflösenden Karte; oder
Modifizieren, durch die Kartenaktualisierungseinrichtung, einer bestehenden Tabelle erweiterter Attribute basie-

rend auf den jüngsten Informationen des dynamischen Ereignisses.

**7.** Verfahren nach Anspruch 5, wobei

das Ausdrücken, durch die Kartenaktualisierungseinrichtung, des dynamischen Ereignisses in der hochauflösenden Karte basierend auf der bestimmten Ausdrucksart des dynamischen Ereignisses Folgendes umfasst: Erhalten, durch die Kartenaktualisierungseinrichtung, jüngster Informationen des dynamischen Ereignisses und Erhalten, aus dem Speicher (702), einer Ausdrucksart des dynamischen Ereignisses;
Bestimmen, durch die Kartenaktualisierungseinrichtung, dass die Ausdrucksart des dynamischen Ereignisses die Ausdrucksart einer dynamischen Schicht ist; und
Erzeugen, durch die Kartenaktualisierungseinrichtung, einer dynamischen Schicht basierend auf den jüngsten Informationen des dynamischen Ereignisses oder Modifizieren einer bestehenden dynamischen Schicht basierend auf den jüngsten Informationen des dynamischen Ereignisses.

**8.** Einrichtung zur Aktualisierung einer hochauflösenden Karte (600), die Einheiten umfasst, die dazu ausgelegt sind, die Schritte in dem Verfahren nach einem der Ansprüche 1 bis 7 durchzuführen.

**9.** Computerlesbares Speichermedium, das ein Programm umfasst, wobei, wenn das Programm durch einen Prozessor (701) ausgeführt wird, das Verfahren nach einem der Ansprüche 1 bis 7 durchgeführt wird.

**10.** Hochauflösende Karte, wobei die hochauflösende Karte eine statische Schicht, die dynamische Informationen enthält, und/oder eine dynamische Schicht, die dynamische Informationen enthält, umfasst und eine Ausdrucksart der dynamischen Informationen in der hochauflösenden Karte unter Verwendung des Verfahrens nach einem der Ansprüche 1 bis 7 bestimmt wird.

## Revendications

**1.** Procédé de mise à jour de carte de haute définition, le procédé comprenant :

l'obtention (S201), par un appareil de mise à jour de carte, d'informations de caractéristiques à n dimensions d'un événement dynamique en n dimensions, les n dimensions étant n facteurs qui affectent l'expression de l'événement dynamique dans une carte de haute définition, l'événement dynamique étant un événement qui provoque le changement d'informations dynamiques dans la carte de haute définition, et n étant un entier supérieur à 1, les n dimensions comprenant au moins deux des dimensions suivantes :
une fréquence de mise à jour d'un état d'événement dynamique, une probabilité d'occurrence d'un événement, un degré d'impact d'un événement sur une topologie de la carte de haute définition, un degré de changement d'association d'un événement, une réutilisation de l'expression géométrique d'un événement pour la couche statique, ou un degré d'indépendance d'un événement par rapport à la couche statique ;
la détermination (S202), par l'appareil de mise à jour de carte sur la base des informations de caractéristiques à n dimensions, d'un mode d'expression de l'événement dynamique dans la carte de haute définition, le mode d'expression comprenant un mode d'expression d'attribut étendu et un mode d'expression de couche dynamique, le mode d'expression d'attribut étendu étant un mode d'expression d'association de l'événement dynamique à une couche statique dans la carte de haute définition et utilisant l'événement dynamique comme attribut étendu d'un élément de couche statique, l'attribut étendu étant une couverture d'un attribut existant de l'élément de carte statique pour exprimer un changement d'attribut de l'élément de carte statique ou un ajout étendu d'un attribut de l'élément de carte statique, et le mode d'expression de couche dynamique étant une manière d'ajouter l'événement dynamique à une couche dynamique dans la carte de haute définition pour l'expression, la détermination étant effectuée à l'aide d'un algorithme de regroupement, d'un mécanisme de vote ou d'un mécanisme de priorité ; et
l'expression (S203), par l'appareil de mise à jour de carte, de l'événement dynamique dans la carte de haute définition sur la base du mode d'expression déterminé de l'événement dynamique.

**2.** Procédé selon la revendication 1, lorsque l'événement dynamique comprend une pluralité d'événements dynamiques, l'obtention, par un appareil de mise à jour de carte, d'informations de caractéristiques à n dimensions d'un événement dynamique en n dimensions comprenant :

l'obtention, par l'appareil de mise à jour de carte, d'informations de caractéristiques à n dimensions de la pluralité

d’événements dynamiques dans les n dimensions ; et
la détermination, par l’appareil de mise à jour de carte sur la base des informations de caractéristiques à n dimensions, d’un mode d’expression de l’événement dynamique dans la carte de haute définition comprenant :
la détermination, par l’appareil de mise à jour de carte, sur la base des informations de caractéristiques à n dimensions de la pluralité d’événements dynamiques dans les n dimensions au moyen d’un algorithme de regroupement, des modes d’expression de la pluralité d’événements dynamiques dans la carte de haute définition.

**3.** Procédé selon la revendication 2, la détermination, en utilisant un algorithme de regroupement, des modes d’expression de la pluralité d’événements dynamiques dans la carte de haute définition comprenant :

la classification, par l’appareil de mise à jour de carte au moyen de l’algorithme de regroupement, de la pluralité d’événements dynamiques afin d’obtenir un événement dynamique de premier type et un événement dynamique de second type ; et
dans un cas de détermination, par une analyse basée sur des informations de caractéristiques à n dimensions de l’événement dynamique de premier type et des informations de caractéristiques à n dimensions de l’événement dynamique de second type, qu’un degré d’association entre l’événement dynamique du premier type et la couche statique dans la carte de haute définition est supérieur à un degré d’association entre l’événement dynamique du second type et la couche statique dans la carte de haute définition, la classification, par l’appareil de mise à jour de carte, de l’événement dynamique du premier type en tant qu’événement exprimé dans le mode d’expression d’attribut étendu, et la classification de l’événement dynamique du second type en tant qu’événement exprimé dans le mode d’expression de couche dynamique.

**4.** Procédé selon la revendication 1, lorsque l’événement dynamique comprend un premier événement dynamique, la détermination, par l’appareil de mise à jour de carte sur la base des informations de caractéristiques à n dimensions, d’un mode d’expression de l’événement dynamique dans la carte de haute définition comprenant :

la détermination, par l’appareil de mise à jour de carte, d’un résultat de détermination d’un mode d’expression du premier événement dynamique dans chaque dimension unique sur la base d’informations caractéristiques dans la dimension unique dans les informations de caractéristiques à n dimensions, pour obtenir n résultats de détermination, le résultat de détermination comprenant que le mode d’expression du premier événement dynamique est l’un du mode d’expression d’attribut étendu ou du mode d’expression de couche dynamique ; et
la détermination, par l’appareil de mise à jour de carte, que le mode d’expression de l’événement dynamique dans la carte de haute définition est un mode d’expression qui représente une proportion la plus importante dans les n résultats de détermination.

**5.** Procédé selon l’une quelconque des revendications 1 à 4, après la détermination, par l’appareil de mise à jour de carte sur la base des informations de caractéristiques à n dimensions, d’un mode d’expression de l’événement dynamique dans la carte de haute définition, le procédé comprenant en outre :
le stockage, par l’appareil de mise à jour de cartes, de l’événement dynamique et du mode d’expression de l’événement dynamique dans une mémoire (702) de manière associée.

**6.** Procédé selon la revendication 5,

l’expression, par l’appareil de mise à jour de carte, de l’événement dynamique dans la carte de haute définition sur la base du mode d’expression déterminé de l’événement dynamique comprenant :
l’obtention, par l’appareil de mise à jour de carte, des dernières informations de l’événement dynamique, et l’obtention, à partir de la mémoire (702), d’un mode d’expression de l’événement dynamique ;
la détermination, par l’appareil de mise à jour de carte, que le mode d’expression de l’événement dynamique est le mode d’expression d’attribut étendu ; et
la création, par l’appareil de mise à jour de carte, d’une table d’attributs étendus sur la base des dernières informations de l’événement dynamique, et l’association de la table d’attributs étendus créée à la couche statique dans la carte de haute définition ; ou
la modification, par l’appareil de mise à jour de cartes, d’une table d’attributs étendus existante sur la base des dernières informations de l’événement dynamique.

**7.** Procédé selon la revendication 5,

l'expression, par l'appareil de mise à jour de carte, de l'événement dynamique dans la carte de haute définition sur la base du mode d'expression déterminé de l'événement dynamique comprenant :
l'obtention, par l'appareil de mise à jour de carte, des dernières informations de l'événement dynamique, et l'obtention, à partir de la mémoire (702), d'un mode d'expression de l'événement dynamique ;
la détermination, par l'appareil de mise à jour de carte, que le mode d'expression de l'événement dynamique est le mode d'expression de couche dynamique ; et
la création, par l'appareil de mise à jour de carte, d'une couche dynamique sur la base des dernières informations de l'événement dynamique, ou la modification d'une couche dynamique existante sur la base des dernières informations de l'événement dynamique.

**8.** Appareil de mise à jour de carte de haute définition (600), comprenant des unités configurées pour effectuer les étapes du procédé selon l'une quelconque des revendications 1 à 7.

**9.** Support de stockage lisible par ordinateur, comprenant un programme, lorsque le programme est exécuté par un processeur (701), le procédé selon l'une quelconque des revendications 1 à 7 étant réalisé.

**10.** Carte de haute définition, la carte de haute définition comprenant au moins l'une parmi une couche statique qui porte des informations dynamiques ou une couche dynamique qui porte des informations dynamiques, et un mode d'expression des informations dynamiques dans la carte de haute définition étant déterminé en utilisant le procédé selon l'une quelconque des revendications 1 à 7.

100
100
Servers
Network
Network
101
101
102
102
101
101
102
102
Vehicle
Vehicle
Roadside unit
Roadside unit
Vehicle
Vehicle
Roadside unit
Roadside unit

FIG. 1

S201: Obtain feature information of a dynamic event in n dimensions, where the n dimensions are n factors that affect expression of the dynamic event in a high-definition map, the dynamic event is an event that causes dynamic information in the high-definition map to change, and n is an integer greater than 0

↓

S202: Determine, based on the feature information, an expression manner of the dynamic event in the high-definition map, where the expression manner includes at least one of an extended attribute expression manner or a dynamic layer expression manner

↓

S203: Express the dynamic event in the high-definition map based on the determined expression manner of the dynamic event

FIG. 2

Dynamic event
Sunny day, cloudy day, raining, and snowing
Dynamic layer expression manner
Haze
Dynamic layer expression manner
Windy condition
Dynamic layer expression manner
Road coverage
Extended attribute expression manner
Road adhesion coefficient
Extended attribute expression manner
Road visibility
Extended attribute expression manner
Temporary point of interest information
Dynamic layer expression manner
Recommendation information
Dynamic layer expression manner
Traffic accident
Extended attribute expression manner
Traffic control
Extended attribute expression manner
Road construction
Extended attribute expression manner
Accident-prone road section
Extended attribute expression manner
Traffic flow information
Dynamic layer expression manner
Traffic light status
Extended attribute expression manner
Vehicle obstacle
Dynamic layer expression manner
Another obstacle
Dynamic layer expression manner
Risk warning information
Dynamic layer expression manner
Collaborative driving information
Dynamic layer expression manner
Route planning information
Dynamic layer expression manner
Network topology change
Dynamic layer expression manner

FIG. 3

Static layer
Map element
Element attribute table
Extended attribute table
Extended attribute event

FIG. 4

Static layer
Map element
Element attribute table
Dynamic layer event
Dynamic layer

FIG. 5

Apparatus 600
Obtaining unit
601
Determining unit
602
Expression unit
603

FIG. 6

Device 700
701
703
Processor
Communication port
704
702
Memory

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020045318 A1